# EUROPEAN PATENT SPECIFICATION

(11) **EP 3 995 920 B1**
(45) Date of publication and mention of the grant of the patent: **31.12.2025**
(21) Application number: 20206648.6
(22) Date of filing: 10.11.2020
(51) Int. Cl.: G05B 23/02, H04L 69/00

(54) **EVENT ANALYTICS IN MODULAR INDUSTRIAL PLANTS**
EREIGNISANALYTIK IN MODULAREN INDUSTRIEANLAGEN
ANALYSE D'ÉVÉNEMENTS DANS DES INSTALLATIONS INDUSTRIELLES MODULAIRES

(43) Date of publication of application: 11.05.2022
(73) Proprietor: ABB Schweiz AG, 5400 Baden (CH)
(72) Inventor: DIX, Marcel, 68167 Mannheim (DE); STARK, Katharina, 69469 Weinheim (DE); BRAUN, Roland, 53859 Niederkassel Lülsdorf (DE); VACH, Michael, 69259 Wilhelmsfeld (DE); GRUENER, Sten, 68549 Ilvesheim (DE); HOERNICKE, Mario, 76829 Landau (DE); SCHOCH, Nicolai, 69115 Heidelberg (DE)
(74) Representative: Maiwald GmbH

(56) References cited:
- EP-A1- 3 191 905
- EP-A1- 3 441 836
- US-A1- 2015 057 788
- US-A1- 2019 129 395

## Description

### FIELD OF THE INVENTION

The invention relates to a computer-implemented event analytics method for a modular industrial plant, to a corresponding event analytics system, and to a computer-readable medium comprising instructions for carrying out the method.

### BACKGROUND

Event analytics is used in traditional non-modular industrial plants to elicit rules and patterns in the occurrences of events, e.g. alarms, which can be used for alarm management, e.g. to hide nuisance alarms, or for root-case analysis and alarm-based anomaly detection, which can in turn be used to perform predictive maintenance. There are typically hundreds measurement points in a plant for which alarms may be raised (relating to flow, levels, temperatures, pressures, etc.). In traditional non-modular plants, information indicating how these measurement points are connected to each other is not typically readily available. Deriving this information manually, e.g. from P&ID diagrams, is a cumbersome endeavour. Without knowing whether measurement points are related, the rules generated by the event analytics algorithm often do not make sense from the plant perspective, and many potentially useful rules may never be generated.

EP 3 441 836 A1 discloses detecting machine errors or product defects in smart factories, by detecting event data having a pattern deviating from a pattern of prior collected operation data. EP 3 191 905 A1 discloses predicting failure events in gas turbines by using historical data associated with recognized failures to identifying pre-event data as a symptom pattern for use in predicting future failures. US 2019/129395 A1 describes a method of alarm notification which discovers patterns of relationships between alarm data and key performance indicator (KPI) data.

### SUMMARY

There is therefore a need for more effective event analytics in industrial plants. This need is met by the subject-matter of the independent claims. Optional features are set forth by the dependent claims.

According to a first aspect, there is provided a computer-implemented event analytics method as defined by claim 1.

While in traditional non-modular plants, events (e.g. alarms) are already used for analysis, the inventors have recognized that the new modular concept of process plants opens up an opportunity for realizing module-based event analytics in
order to provide new insights into event rules and patterns which may not have been recognized when analyzing events in non-modular plants. The module-based event analytics provided by the present disclosure may be used to reduce the occurrence of nuisance alarms by implementing module-based alarm management and/or to reduce downtime by performing predictive maintenance of modules, for example.

Although various kinds of event may be analysed with the systems and methods described herein, the event may in particular comprise an alarm.

By "fingerprint" is meant a data collection capturing or recording which event types occurred in the respective module during a predetermined time interval, e.g. at a given hour or on a given day. In a module there can be several sensors, such as pressure sensors, temperature sensors, flow sensors, level sensors. For each sensor there can be alarms defined such as a high alarm, high-high alarm, low alarm, low-low alarm. A fingerprint of the module can therefore be viewed as the sum of all events (e.g. alarms) that happened in the module at a given time. That time could be e.g. a timespan of one minute or one hour. The sum of events is typically unique to the timespan and thus provides an indication of the state of the module. When a certain fingerprint is generated for a module at a given time, an indication is thus provided regarding which state that module is in. This information is used by the module-based event analytics as described herein.

Numerous forms of module-based event analytics based on the generated module fingerprint are possible.

In one example, performing module-based event analytics comprises determining a current state of the module based on the generated module fingerprint. Additionally or alternatively, performing module-based event analytics comprises predicting a future state of the module based on the generated module fingerprint.

The state of the module (the module state) comprises one or more of an anomaly, a failure, a fault, an error, an alarm, or a critical state, where the state is that of the module as a whole, of a service or function performed by the module, or of an actuator or other component of the module, for example.

The determining the current state or the predicting the future state may comprise inputting the generated module fingerprint to a machine learning model trained on the basis of one or more previously generated module fingerprints to determine the current state or predict the future state, respectively. The method may further comprise training the machine learning model on the basis of the one or more previously generated module fingerprints to determine the current state or predict the future state, respectively.

Additionally or alternatively, the determining the current state or the predicting the future state may be performed with reference to (or on the basis of) one or more previously generated module fingerprints for the said module. Any one or more module fingerprints for the said module may be used to identify a sequence of events in the module. For example, the determining the current state of the module or the predicting the future state of the module may comprise using a sequence of events identified from the one or more previously generated module fingerprints for the module to determine the current state or predict the future state, respectively. The method may thus comprise identifying a sequence of events in the module fingerprint and/or in one or more previously generated module fingerprints for the module. The method may comprise comprising using the identified sequence of events to determine the current state and/or predict the future state of the module. In other words, the determining the current state or the predicting the future state may comprise comparing the module fingerprint with one or more previously generated module fingerprints of the said module. Comparing the module fingerprint with one or more previously generated module fingerprints may comprises comparing monitored events occurring in the module during the predetermined time interval with historical monitored events occurring in the same module, for example during comparable time intervals. Comparing the module fingerprint with one or more previously generated module fingerprints of the said module may comprise identifying differences between the module fingerprint and the one or more previously generated module fingerprints which are indicative of the state. Thus, the one or more previously generated module fingerprints may have been generated during time intervals which are comparable with the predetermined time interval, for example time intervals which begin and/or end at the same time of day, during the same hour or minute of the day, or at the same timepoints with reference to the production process. Comparing the module fingerprint with one or more previously generated module fingerprints for the said module may comprise detecting an anomaly in response to the module fingerprint deviating by a predetermined amount (for example according to an appropriate similarity metric) from an expected module fingerprint comprising one or more of the previously generated module fingerprints. The one or more previously generated module fingerprints may be averaged or clustered as described herein. By "expected" is meant that the one or more previously generated module fingerprints were generated at time intervals which are comparable with the predetermined time interval, as discussed above.

The may further comprise presenting one or more of the determined current state and the predicted future state of the module for viewing by a plant operator, for example on a monitoring dashboard of the modular industrial plant.

The one or more rules may be identifiable also from one or more previously generated module fingerprints for the module. The determining the one or more rules comprises determining the one or more rules based on data defining operator commands appearing in the module fingerprints (i.e. the currently generated module fingerprint and/or previously generated module fingerprints). Additionally, according to the invention, performing module-based event analytics comprises determining one or more rules governing operator handling of the monitored events. Determining the one or more rules may comprise learning the rules based on data defining operator commands appearing in the events monitored during the predetermined time interval. The method further comprises automatically operating the modular industrial plant according to the determined rules. In this case, the method is described as a method of operating a modular industrial plant.

In any of the above examples or in another example, the performing module-based event analytics comprises performing correlation analysis on the module fingerprint to identify associations between the monitored events. The identifying associations between the monitored events may comprise identifying redundant event types in the module, for example redundant alarm types. The method may further comprise combining associated event types so identified to define an aggregate event type, and, in response to detecting an instance of one or more of the associated event types in the modular industrial plant, presenting only an event of the aggregated event type for viewing by a plant operator. In other words, presentation of the individual associated events in the aggregate event type may be suppressed.

The method may further comprises signalling to a plant operator that predictive maintenance is to be performed in response to a predetermined outcome of module-based event analytics. The predetermined outcome may comprise one or more of (i) determination of a current state of the module, (ii) the prediction of a future state, especially where that state comprises an alarm state and/or an anomaly state. The method may further comprising performing predictive maintenance in response to the predetermined outcome, in which case the method may be described as a method of operating or maintaining a modular industrial plant.

The method may further comprise: repeating the steps of monitoring and generating so as to generate a plurality of module fingerprints; and clustering the plurality of fingerprints using a clustering algorithm; wherein the performing comprises performing the module-based event analytics based on the plurality of clustered module fingerprints. The performing the module-based event analytics based on the plurality of clustered module fingerprints may comprise identifying a state of the said module from the monitored events appearing in a cluster of the module fingerprints and associating the identified state with the said cluster. The method may further comprise repeating the steps of monitoring, generating, and performing to obtain a subsequent module fingerprint, the method further comprising detecting occurrence of the state of the module in response to the subsequent module fingerprint being similar to the said cluster of previously-generated module fingerprints according to a predetermined similarity metric. The plurality of module fingerprints may relate to partially overlapping or non-overlapping time intervals. Any appropriate timepoints for the beginning and end of each time interval may be chosen. For example, the time intervals may begin and end at the same time each day, each hour, or at the same timepoints with respect to a process being carried out by the modular industrial plant.

According to a second aspect, there is provided an event analytics system (e.g. a computing device) comprising a processor configured to perform the method of the first aspect.

According to a third aspect, there is provided a module monitoring system, or an alarm management system, or a module management system, comprising the event analytics system of the second aspect.

According to a fourth aspect, there is provided a computer-readable medium comprising instructions which, when executed by a computing device, enable the computing device to carry out the method of the first aspect.

According to a fifth aspect, there is provided a computer program product comprising instructions which, when executed by a computing device, enable the computing device to carry out the method of the first aspect.

In the context of the present disclosure, the terms "module" and "unit" are used interchangeably.

These and other aspects of the invention will be apparent from and elucidated with reference to the embodiments described hereinafter.

### BRIEF DESCRIPTION OF THE DRAWINGS

A detailed description will now be given, by way of example only, with reference to the accompanying drawings, in which:-
Figure 1 illustrates a modular industrial plant;
Figure 2 is a flowchart representing an event analytics method; and
Figure 3 illustrates a computing device that can be used in accordance with the systems and methods disclosed herein.

### DETAILED DESCRIPTION

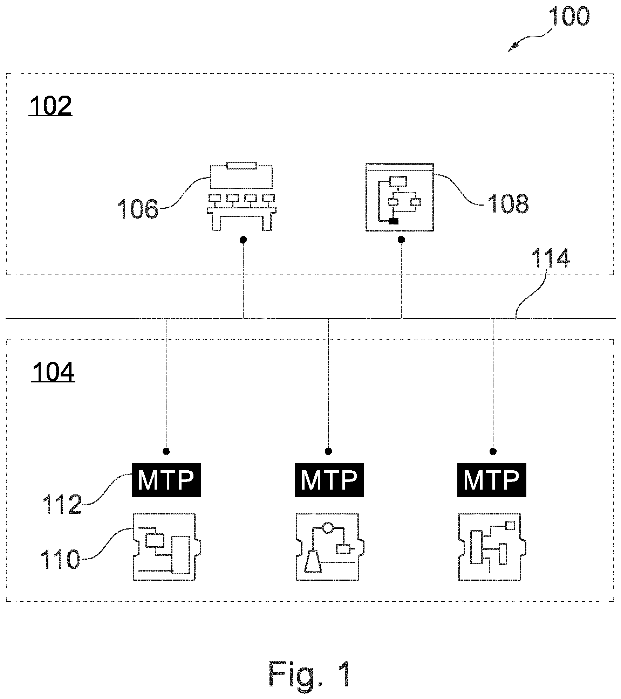

Figure 1 shows a modular industrial plant 100 comprising an orchestration layer 102 and a module layer 104. The orchestration layer 102 comprises an operations desk 106 including a monitoring dashboard and a supervisory control system 108. Although the operations desk 106 and supervisory control system 108 are shown as two separate entities, it will be appreciated that these entities may be provided by a centralized control system or by a distributed control system. The module layer 104 comprises a plurality of modules 110 each described by a configuration file in the form of a Module Type Package or MTP 112, described further below. Each module 110 comprises a controller (not shown) executing control logic (automation logic) for the module. Each module 110 provides a set of encapsulated process functions, called services, such as mixing, tempering or heating, that can be orchestrated by the supervisory control system 108. The modules 110 are integrated into the plant 100 via the orchestration layer 102. Communications between entities in the orchestration layer 102 and module layer 104 take place via an architecture network 114 using the OPC UA protocol (OPC Unified Architecture, a machine-to-machine communication protocol for industrial automation developed by the OPC Foundation). Each module 110 comprises an OPC UA server (not shown) which exposes the module's services and tags to the supervisory control system 108. The supervisory control system 108 comprises an OPC UA client (not shown) which connects to the modules' OPC UA servers to communicate commands to the modules 110. By controlling the services in the right way, the orchestration layer 102 ensures that the modules 110 work together to fulfil the requirements of the plant 100.

Module Type Package (MTP) is a standard for modular automation systems which creates a framework for interoperability between the orchestration layer 102 and the module layer 104, allowing industrial process plants to be built up and engineered in a modular way, with the goal of simplifying process plant engineering and life cycle management. These advantages are realized by the prefabricated and well-tested modules 110, which may also be called PEAs (Process Equipment Assembly), that can easily be put together in different combinations so that different recipes can be realized. Each MTP 112 provides a module type description. The MTP 112 may define, for example, one or more of (i) communications with the module; (ii) the human-machine interface (HMI) of the module; (iii) definitions of tags used by the module; (iv) definitions of services provided by the module (for example definitions of the automation logic using e.g. state machines); (v) alarm management procedures used by the module; (vi) safety aspects. The HMI consists of symbols and lines that visualize the equipment and the process flow, for example in the form of a P&ID (piping and instrumentation diagram). Each symbol, parameter and so on is tagged and a tag list is provided, as is known in the art. From the MTP, control software for the module 110 may be automatically generated, to be executed by the module's controller.

The orchestration layer 102 further comprises an event analytics system, which may form part of one or both of the operations desk 106 and supervisory control system 108. The event analytics system may in turn form part of one or more of a module health monitoring system, an alarm management system, or a fleet management system. Any of these systems may be computer-implemented, using for example the computing device described below. The event analytics system is configured to monitor events in a module 110 during a predetermined time interval, to generate a module fingerprint based on the monitored events occurring in the module 110 during the predetermined time interval, and to perform module-based event analytics based on the generated module fingerprint. Numerous forms of module-based event analytics are envisaged by the present disclosure, as described further below.

With the concept of modules, it is known which measurement points and alarms belong together, because they belong to the same module. The module fingerprint records which event types occurred in the module during a given time interval, e.g. at a given hour or on a given day. According to the present disclosure, data analytics for modules is enabled via the module fingerprint, which may be mined for data in the manner described herein.

According to the invention, performing module-based event analytics based on the generated module fingerprint comprises mining for rules which are identifiable from the data contained in the module fingerprint. Additionally, performing module-based event analytics may comprise mining for rules which are identifiable from data contained in the module fingerprints of other modules. Mining for rules may thus comprise identifying rules within a single module or across modules. For example, the event analytics system is configured to perform module-based analysis of events, in particular alarms, by mining for alarm-rules within single modules 110 (such as "when alarm a1 then alarm a2 in module A"), and/or mining for rules across modules 110, based on alarms such as "when alarm situation s1 in module A then alarm situation s2 in module B".

Mining for rules may comprise identifying redundant alarms from the data contained in the module fingerprint and/or data contained in the module fingerprints of other modules. For example, the event analytics system may be configured to perform correlation analysis on the alarms and events of a module 110, to determine redundant alarms which always occur together on the same module and which could therefore be combined in order to reduce the number of alarms for the module, for alarm reduction and alarm management.

Mining for rules may comprise identifying alarm sequences in the module fingerprint of the module 110, thereby allowing for alarm prediction and alarm root-cause analysis.

Mining for rules may comprise determining one or more rules governing operator handling of the monitored events. Determining the one or more rules may comprise learning the rules based on data defining operator commands appearing in the events monitored during the predetermined time interval. For example, the event analytics system may comprise a learning system that gets to know the alarm handling as implemented by the operator over time. Based on the operator actions on the plant 100 and the comparison to the alarms that occurred at the same time, the learning system learns which alarms are of importance and which could potentially be hidden. If for example the operator simply deletes or acknowledges an alarm when it is thrown, without performing any further action, then this alarm represents a candidate for hiding. Based on this knowledge, the event analytics system creates recommendations for configuration of the alarm management system and the engineer may decide whether or not to hide the alarm.

The determined rules may be used for example to optimize performance, reduce annoyances, and so on. In addition to using historical data of the respective module and/or data from other modules of the same time, rules can be determined to identify when alarms are critical (or even provide an alternative, e.g. when historical data are not available). The rules may describe how to handle alarms; e.g. "If alarm X is not thrown more often than twice per hour, then ignore, else, pass to higher level alarm type". Such rules could be used for instance to reduce the nuisance for unit/module/plant operators with respect to upcoming alarms, or cause less annoyance through unnecessary alarms. The rules may be commonly agreed upon, which in turn could be offered as service as part of the unit/module pool.

In the example above or in another example, performing module-based event analytics comprises detecting anomalies in the module by comparing the monitored events occurring in the module during the predetermined time interval with historical monitored events occurring in the same module, for example those historical monitored events which occurred in the same module during previous comparable time intervals. For example, based on the alarms that occurred during operation of the module 110, module failures may be estimated. The estimation can be based on the type and amount of alarms. Additionally, failures of other modules 110 of same type may be compared to those of the current module 110. Using this historical data and the current data of the module 110, as well as the comparison with other modules 110 of the same type, predictive maintenance cycles may be planned.

Additionally or alternatively, performing module-based event analytics may comprise training at least one machine learning model to predict anomalies using the monitored events as input, and/or predicting anomalies using a so trained machine learning model. For example, alarms and events occurring within a module 110 may be input as features to a module-based machine learning model to learn the model to predict the behavior or the health of the module 110, for predictive maintenance, for example. A module-based machine learning algorithm may be realized for example by taking historic events or a subset of events for a module 110 and calculating an anomaly score for the module 110, to predict the future behavior or future health condition of this module 110.

Anomaly detection as described herein may be performed by an anomaly detection algorithm of the event analytics system for module health monitoring.

In one example, in which a plurality e.g. hundreds or thousands of such module fingerprints are generated, these module fingerprints are clustered to generate e.g. 10 clusters of module fingerprints. One cluster may be related to a specific module problem, another cluster may be specific to a certain procedure (e.g. service or function) that the module performs, and so on. With this information, the clustered module fingerprints may be used to predict possible module problems in the future. For example, if a particular module fingerprint reappears (at least to some degree of similarity with a cluster), this can be used to detect the module problem that was identified when the module fingerprints were clustered.

Several use-cases of the module-based event analytics are possible, as will now be described.

The module-based event analytics as described herein may be used to implement alarm management by an alarm management system/tool/dashboard, or an event/alarm handling system/tool/dashboard.

The module-based event analytics as described herein may be used to implement module-based health monitoring, for example for predictive maintenance, by a module health monitoring system/tool/dashboard. For example, the module-based event analytics, for example when implemented using machine learning models as described above, such as module-based anomaly detection models, provide users such as maintenance personal with an overview of the health condition of a module 110.

The module-based event analytics as described herein may be used to implement module-based fleet management, for example in the form of a unit pool for unit vendors, which contains information regarding the health of the modules, their maintenance cycles, and so on. The information, which may be stored in a central place, allows for reductions in the downtime for units of the same type. For example, the mean time between failures (MTBF) for a module could be estimated based on the alarms contained in the module fingerprint, and downtime could be reduced by performing predictive maintenance. For instance, if errors in the unit software are detected in the plant 100 with help of such a fleet management system, the software can be fixed for this unit and tested for the unit. If the software has passed the test, it can be rolled out to every other instance of the unit.

Information provided by the module-based event analytics may be provided to a monitoring and visualization system (such as a monitoring dashboard, for example that of the operations desk 106 of the modular plant 100) that presents the determined status of modules 110.

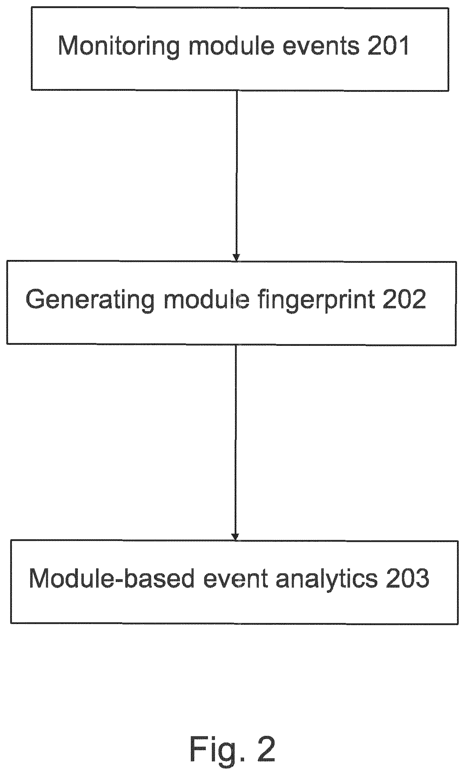

Figure 2 is a flowchart representing an event analytics method for the modular industrial plant 100. The method comprises, at 201, monitoring events in a module 110 of the modular industrial plant 100 during a predetermined time interval. At 203, the method comprises generating a module fingerprint based on the monitored events occurring in the module 110 during the predetermined time interval. At 203, the method comprises performing module-based event analytics based on the generated module fingerprint. The method may be performed by the above-described event analytics system, and may further comprise method steps corresponding to the actions performed by that system.

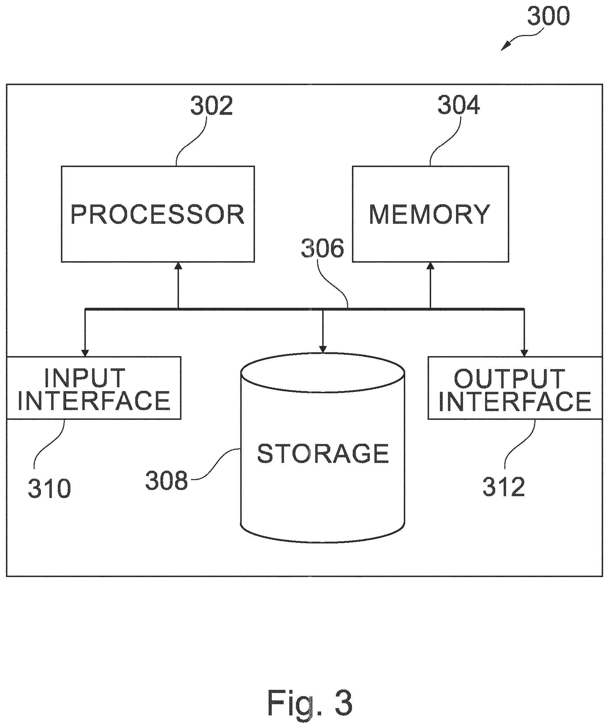

Referring now to figure 3, a high-level illustration of an exemplary computing device 300 that can be used in accordance with the systems and methodologies disclosed herein is illustrated. In particular, the computing device may be used to implement the above-described event analytics system. The computing device 300 includes at least one processor 302 that executes instructions that are stored in a memory 304. The instructions may be, for instance, instructions for implementing functionality described as being carried out by one or more components discussed above or instructions for implementing one or more of the methods described above. The processor 302 may access the memory 304 by way of a system bus 306. In addition to storing executable instructions, the memory 304 may also store conversational inputs, scores assigned to the conversational inputs, etc.

The computing device 300 additionally includes data storage 308 that is accessible by the processor 302 by way of the system bus 306. The data storage 308 may include executable instructions, log data, etc. The computing device 300 also includes an input interface 310 that allows external devices to communicate with the computing device 300. For instance, the input interface 310 may be used to receive instructions from an external computer device, from a user, etc. The computing device 300 also includes an output interface 312 that interfaces the computing device 300 with one or more external devices. For example, the computing device 300 may display text, images, etc. by way of the output interface 312.

It is contemplated that the external devices that communicate with the computing device 300 via the input interface 310 and the output interface 312 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 300 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 300 may be a distributed system. Thus, for instance, several devices may be in communication by way of a network connection and may collectively perform tasks described as being performed by the computing device 300 .

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

While the invention has been illustrated and described in detail in the drawings and foregoing description, such illustration and description are to be considered exemplary and not restrictive. The invention is set out in the appended set of claims.

Other variations to the disclosed embodiments can be understood and effected by those skilled in the art, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used advantageously. A computer program may be stored/distributed on a suitable medium, such as an optical storage medium or a solid-state medium supplied together with or as part of other hardware, but may also be distributed in other forms, such as via the internet or other wired or wireless communications systems. Any reference signs in the claims should not be construed as limiting the scope.

## Claims

1. A computer-implemented method for operating a modular industrial plant (100), the method comprising:
monitoring (201) events in a module (110) of the modular industrial plant during a predetermined time interval, wherein the module provides a set of encapsulated process functions that can be orchestrated by a supervisory control system (108) of the modular industrial plant;
generating (202) a module fingerprint based on the monitored events occurring in the module during the predetermined time interval, wherein the module fingerprint comprises data recording which event types occurred in the module during the predetermined time interval, wherein the data recording which event types occurred in the module provide an indication of the state of the module, and wherein the state of the module comprises one or more of an anomaly, a failure, a fault, an error, and a critical state;
performing (203) module-based event analytics based on the generated module fingerprint, wherein performing the module-based event analytics comprises determining one or more rules which are identifiable from the module fingerprint for the module based on data defining operator commands appearing in the module fingerprint, wherein the one or more rules govern operator handling of the monitored events; and
automatically operating the modular industrial plant according to the determined rules.

2. The method of claim 1, wherein the one or more rules describe how to handle alarms.

3. The method of claim 2, comprising learning, based on the operator commands and the alarms that occurred during the predetermined time interval, which alarms are of importance and which are candidates for hiding.

4. The method of claim 1, further comprising:
repeating the steps of monitoring (201) and generating (202) so as to generate a plurality of module fingerprints; and
clustering the plurality of fingerprints using a clustering algorithm;
wherein the performing (203) comprises performing the module-based event analytics based on the plurality of clustered module fingerprints.

5. The method of claim 1 or 4, wherein the performing (203) module-based event analytics comprises inputting the generated module fingerprint to a machine learning model trained on the basis of one or more previously generated module fingerprints to (i) determine a current state of the module (110) based on the generated module fingerprint; or (ii) predict a future state of the module (110) based on the generated module fingerprint.

6. The method of claim 5, further comprising training the machine learning model on the basis of the one or more previously generated module fingerprints to determine the current state or predict the future state, respectively.

7. The method of claim 5 or 6, wherein the determining the current state or the predicting the future state is performed with reference to one or more previously generated module fingerprints for the said module (110).

8. The method of claim 7, wherein the determining the current state of the module (110) or the predicting the future state of the module comprises using a sequence of events identified from the one or more previously generated module fingerprints for the module (110) to determine the current state or predict the future state, respectively.

9. The method of any preceding claim, wherein the one or more rules are identifiable also from one or more previously generated module fingerprints for the module (110).

10. The method of any preceding claim, wherein the performing (203) module-based event analytics comprises performing correlation analysis on the module fingerprint to identify associations between the monitored events.

11. The method of claim 10, wherein identifying associations between the monitored events comprises identifying redundant event types in the module (110).

12. The method of claim 10 or 11, further comprising combining associated event types to define an aggregate event type, and, in response to detecting an instance of one or more of the associated event types in the modular industrial plant, presenting only an event of the aggregated event type for viewing by a plant operator.

13. The method of any preceding claim, further comprising signalling to a plant operator that predictive maintenance is to be performed in response to a predetermined outcome of module-based event analytics;
wherein the predetermined outcome comprises one or more of (i) determination of a current state of the module, (ii) the prediction of a future state, especially where that state comprises an alarm state and/or an anomaly state.

14. An event analytics system (300) comprising a processor (302) configured to perform the method of any preceding claim.

15. A computer-readable medium (304, 308) comprising instructions which, when executed by a computing device (300), enable the computing device to carry out the method of any of claims 1-13.

## Patentansprüche

1. Computerimplementiertes Verfahren zum Betreiben einer modularen Industrieanlage (100), wobei das Verfahren umfasst:
Überwachen (201) von Ereignissen in einem Modul (110) der modularen Industrieanlage während eines vorbestimmten Zeitintervalls, wobei das Modul eine Reihe von gekapselten Prozessfunktionen bereitstellt, die von einem übergeordneten Steuerungssystem (108) der modularen Industrieanlage orchestriert werden können;
Erzeugen (202) eines Modul-Fingerabdrucks basierend auf den überwachten Ereignissen, die im Modul während des vorbestimmten Zeitintervalls auftreten, wobei der Modul-Fingerabdruck Daten umfasst, die aufzeichnen, welche Ereignistypen im Modul während des vorbestimmten Zeitintervalls aufgetreten sind, wobei die Daten, die aufzeichnen, welche Ereignistypen im Modul aufgetreten sind, einen Hinweis auf den Zustand des Moduls geben, und wobei der Zustand des Moduls eines oder mehrere von einer Anomalie, einem Ausfall, einem Fehler, einer Störung und einem kritischen Zustand umfasst;
Durchführen (203) von modulbasierten Ereignisanalysen basierend auf dem erzeugten Modul-Fingerabdruck, wobei das Durchführen der modulbasierten Ereignisanalysen das Bestimmen von einem oder mehreren Regeln umfasst, die aus dem Modul-Fingerabdruck für das Modul auf Basis von Daten, die Bedienerbefehle im Modul-Fingerabdruck definieren, identifizierbar sind, wobei die eine oder mehrere Regeln das Bedienerverhalten beim Umgang mit den überwachten Ereignissen steuern; und Automatisches Betreiben der modularen Industrieanlage gemäß den bestimmten Regeln.

2. Verfahren nach Anspruch 1, wobei die eine oder mehrere Regeln beschreiben, wie mit Alarmen umzugehen ist.

3. Verfahren nach Anspruch 2, umfassend das Lernen, basierend auf den Bedienerbefehlen und den Alarmen, die während des vorbestimmten Zeitintervalls aufgetreten sind, welche Alarme von Bedeutung sind und welche Kandidaten für das Ausblenden sind.

4. Verfahren nach Anspruch 1, ferner umfassend:
Wiederholen der Schritte des Überwachens (201) und Erzeugens (202), um eine Vielzahl von Modul-Fingerabdrücken zu erzeugen; und Clustern der Vielzahl von Fingerabdrücken mittels eines Clustering-Algorithmus; wobei das Durchführen (203) das Durchführen der modulbasierten Ereignisanalysen basierend auf der Vielzahl von geclusterten Modul-Fingerabdrücken umfasst.

5. Verfahren nach Anspruch 1 oder 4, wobei das Durchführen (203) der modulbasierten Ereignisanalysen das Eingeben des erzeugten Modul-Fingerabdrucks in ein auf Basis von einem oder mehreren zuvor erzeugten Modul-Fingerabdrücken trainiertes maschinelles Lernmodell umfasst, um (i) einen aktuellen Zustand des Moduls (110) basierend auf dem erzeugten Modul-Fingerabdruck zu bestimmen; oder (ii) einen zukünftigen Zustand des Moduls (110) basierend auf dem erzeugten Modul-Fingerabdruck vorherzusagen.

6. Verfahren nach Anspruch 5, ferner umfassend das Trainieren des maschinellen Lernmodells auf Basis der einen oder mehreren zuvor erzeugten Modul-Fingerabdrücke, um den aktuellen Zustand bzw. den zukünftigen Zustand zu bestimmen oder vorherzusagen.

7. Verfahren nach Anspruch 5 oder 6, wobei das Bestimmen des aktuellen Zustands oder das Vorhersagen des zukünftigen Zustands unter Bezugnahme auf einen oder mehrere zuvor erzeugte Modul-Fingerabdrücke für das betreffende Modul (110) erfolgt.

8. Verfahren nach Anspruch 7, wobei das Bestimmen des aktuellen Zustands des Moduls (110) oder das Vorhersagen des zukünftigen Zustands des Moduls die Verwendung einer Ereignisfolge umfasst, die aus den einen oder mehreren zuvor erzeugten Modul-Fingerabdrücken für das Modul (110) identifiziert wurde, um den aktuellen Zustand bzw. den zukünftigen Zustand zu bestimmen oder vorherzusagen.

9. Verfahren nach einem der vorhergehenden Ansprüche, wobei die eine oder mehrere Regeln auch aus einem oder mehreren zuvor erzeugten Modul-Fingerabdrücken für das Modul (110) identifizierbar sind.

10. Verfahren nach einem der vorhergehenden Ansprüche, wobei das Durchführen (203) der modulbasierten Ereignisanalysen das Durchführen einer Korrelationsanalyse des Modul-Fingerabdrucks umfasst, um Zusammenhänge zwischen den überwachten Ereignissen zu identifizieren.

11. Verfahren nach Anspruch 10, wobei das Identifizieren von Zusammenhängen zwischen den überwachten Ereignissen das Identifizieren von redundanten Ereignistypen im Modul (110) umfasst.

12. Verfahren nach Anspruch 10 oder 11, ferner umfassend das Kombinieren von zusammenhängenden Ereignistypen zur Definition eines aggregierten Ereignistyps und, als Reaktion auf das Erkennen eines Auftretens von einem oder mehreren der zusammenhängenden Ereignistypen in der modularen Industrieanlage, das Anzeigen nur eines Ereignisses des aggregierten Ereignistyps zur Ansicht durch einen Anlagenbediener.

13. Verfahren nach einem der vorhergehenden Ansprüche, ferner umfassend das Signalisieren an einen Anlagenbediener, dass eine prädiktive Wartung durchzuführen ist als Reaktion auf ein vorbestimmtes Ergebnis der modulbasierten Ereignisanalysen; wobei das vorbestimmte Ergebnis eines oder mehrere von (i) Bestimmung eines aktuellen Zustands des Moduls, (ii) Vorhersage eines zukünftigen Zustands umfasst, insbesondere wenn dieser Zustand einen Alarmzustand und/oder einen Anomaliezustand umfasst.

14. Ereignisanalyse-System (300), umfassend einen Prozessor (302), der konfiguriert ist, das Verfahren nach einem der vorhergehenden Ansprüche auszuführen.

15. Computerlesbares Medium (304, 308), umfassend Anweisungen, die, wenn sie von einer Recheneinrichtung (300) ausgeführt werden, die Recheneinrichtung dazu befähigen, das Verfahren nach einem der Ansprüche 1-13 auszuführen.

## Revendications

1. Procédé mis en œuvre par ordinateur de fonctionnement d'une installation industrielle modulaire (100), le procédé comprenant :
la surveillance (201) d'événements dans un module (110) de l'installation industrielle modulaire durant un intervalle de temps prédéterminé, dans lequel le module fournit un ensemble de fonctions de processus encapsulées qui peuvent être orchestrées par un système de contrôle superviseur (108) de l'installation industrielle modulaire ;
la génération (202) d'une empreinte de module sur la base des événements surveillés se produisant dans le module durant l'intervalle de temps prédéterminé, dans lequel l'empreinte de module comprend des données enregistrant des types d'événement qui se sont produits dans le module durant l'intervalle de temps prédéterminé, dans lequel les données enregistrant les types d'événement qui se sont produits dans le module fournissent une indication de l'état du module, et dans lequel l'état du module comprend un ou plusieurs éléments parmi une anomalie, une défaillance, une panne, une erreur, et un état critique ;
la réalisation (203) d'analyse d'événement à base de module sur la base de l'empreinte de module générée, dans lequel la réalisation de l'analyse d'événement à base de module comprend la détermination d'une ou de plusieurs règles qui sont identifiables à partir de l'empreinte de module pour le module sur la base de données définissant des commandes opérateur apparaissant dans l'empreinte de module, dans lequel l'une ou les plusieurs règles gouvernent un traitement opérateur des événements surveillés ; et
le fonctionnement automatique de l'installation industrielle modulaire selon les règles déterminées.

2. Procédé de la revendication 1, dans lequel l'une ou les plusieurs règles décrivent la manière dont des alarmes doivent être traitées.

3. Procédé de la revendication 2, comprenant l'apprentissage, sur la base des commandes opérateur et des alarmes qui se sont produites durant l'intervalle de temps prédéterminé, d'alarmes qui sont d'importance et celles qui sont candidates pour masquage.

4. Procédé de la revendication 1, comprenant en outre :
la répétition des étapes de la surveillance (201) et de la génération (202) afin de générer une pluralité d'empreintes de module ; et
le groupement de la pluralité d'empreintes en utilisant un algorithme de groupement ;
dans lequel la réalisation (203) comprend la réalisation des analyse d'événement à base de module sur la base de la pluralité d'empreintes de module groupées.

5. Procédé de la revendication 1 ou 4, dans lequel la réalisation (203) d'analyse d'événement à base de module comprend l'entrée de l'empreinte de module générée dans un modèle d'apprentissage machine entraîné, sur la base d'une ou de plusieurs empreintes de module générées auparavant, pour (i) déterminer un état actuel du module (110) sur la base de l'empreinte de module générée ; ou (ii) prédire un état futur du module (110) sur la base de l'empreinte de module générée.

6. Procédé de la revendication 5, comprenant en outre l'entraînement du modèle d'apprentissage machine sur la base de l'une ou des plusieurs empreintes de module générées auparavant pour déterminer l'état actuel ou prédire l'état futur, respectivement.

7. Procédé de la revendication 5 ou 6, dans lequel la détermination de l'état actuel ou la prédiction de l'état futur est réalisée en référence à une ou à plusieurs empreintes de module générées auparavant pour ledit module (110).

8. Procédé de la revendication 7, dans lequel la détermination de l'état actuel du module (110) ou la prédiction de l'état futur du module comprend l'utilisation d'une séquence d'événements identifiés à partir de l'une ou des plusieurs empreintes de module générées auparavant pour le module (110) pour déterminer l'état actuel ou prédire l'état futur, respectivement.

9. Procédé d'une quelconque revendication précédente, dans lequel l'une ou les plusieurs règles sont identifiables également à partir d'une ou de plusieurs empreintes de module générées auparavant pour le module (110).

10. Procédé d'une quelconque revendication précédente, dans lequel la réalisation (203) d'analyse d'événement à base de module comprend la réalisation d'analyse de corrélation sur l'empreinte de module pour identifier des associations entre les événements surveillés.

11. Procédé de la revendication 10, dans lequel l'identification d'associations entre les événements surveillés comprend l'identification de types d'événement redondants dans le module (110).

12. Procédé de la revendication 10 ou 11, comprenant en outre la combinaison de types d'événement associés pour définit un type d'événement agrégé, et, en réponse à la détection d'un cas d'un ou de plusieurs des types d'événement associés dans l'installation industrielle modulaire, la présentation seulement d'un événement du type d'événement agrégé pour visualisation par un opérateur d'installation.

13. Procédé d'une quelconque revendication précédente, comprenant en outre l'annonce, à un opérateur d'installation, qu'une maintenance prédictive doit être réalisée en réponse à un résultat prédéterminé d'analyse d'événement à base de module ;
dans lequel le résultat prédéterminé comprend une ou plusieurs actions parmi (i) la détermination d'un état actuel du module, (ii) la prédiction d'un état futur, particulièrement lorsque cet état comprend un état d'alarme et/ou un état d'anomalie.

14. Système d'analyse d'événement (300), comprenant un processeur (302) configuré pour réaliser le procédé d'une quelconque revendication précédente.

15. Support lisible par ordinateur (304, 308), comprenant des instructions qui, lorsqu'elles sont exécutées par un dispositif informatique (300), permettent au dispositif informatique d'effectuer le procédé de quelconque des revendications 1 à 13.
